# EUROPÄISCHE PATENTANMELDUNG

(11) **EP 4 755 761 A1**
(43) Veröffentlichungstag der Anmeldung: **10.06.2026**
(21) Anmeldenummer: 25213343.4
(22) Anmeldetag: 04.11.2025
(51) Int. Cl.: B62D 15/02, B60Q 1/00

(54) **VERFAHREN EINES FAHRZEUGS ZUR UNTERSTÜTZUNG EINES FAHRERS BEI EINEM WENDEANLIEGEN, STEUEREINHEIT UND FAHRZEUG**

(30) Priorität: 03.12.2024 DE 102024135782
(71) Anmelder: Volkswagen Aktiengesellschaft, 38440 Wolfsburg (DE)
(72) Erfinder: Haink, Ronny, 38440 Wolfsburg (DE)

(57) **Zusammenfassung**

Die Erfindung betrifft ein Verfahren eines Fahrzeugs (1) zur Unterstützung bei einem Wendeanliegen eines Fahrers. Das Verfahren weist als einen ersten Schritt ein Erfassen (101), zumindest eines Sensorwertes zu einer Fahrzeugumgebung auf. Es ist vorgesehen, dass ferner ein Wendeanliegen an einer aktuellen Fahrzeugposition (61) erkannt (102) wird. Weiterhin wird eine Durchführbarkeit eines Wendemanövers an der aktuellen Fahrzeugposition (61) basierend auf dem zumindest einen Sensorwert ermittelt (103) und ein automatischer Rückfahrbetrieb (104) des Fahrzeugs (1) durchgeführt, sofern an der aktuellen Fahrzeugposition (61) ein Wendemanöver nicht durchführbar ist. Der Rückfahrbetrieb (104) kann dabei bis zu einem zum Wenden des Fahrzeugs (1) geeigneten Ort (62) durchgeführt werden. Die Erfindung betrifft ferner eine zur Durchführung dieses Verfahrens ausgebildete Steuereinheit (40) und ein Fahrzeug (1), das eine solche Steuereinheit (40) aufweist.

## Beschreibung

Die Erfindung betrifft ein Verfahren eines Fahrzeugs zur Unterstützung eines Fahrers bei einem Wendeanliegen. Ferner betrifft die Erfindung eine zur Durchführung dieses Verfahrens ausgebildete Steuereinheit und ein Fahrzeug, das eine solche Steuereinheit aufweist.

In Anbetracht der zunehmenden Urbanisierung und der damit verbundenen Herausforderungen im Straßenverkehr, wie begrenzte Parkmöglichkeiten und enge Straßenverhältnisse, stellt ein Wenden eines Fahrzeugs für viele Fahrer ein Problem dar. Dies liegt zum einen daran, dass die Fahrer den damit verbundenen Lenkaufwand oft scheuen, und zum anderen daran, dass sie Schwierigkeiten haben, den erforderlichen Platz sowie den verfügbaren Raum korrekt einzuschätzen. Darüber hinaus neigen die Fahrer dazu, nicht schnell genug zu lenken und den vorhandenen Raum nicht optimal auszunutzen. Ein langsames, von einem unsicheren Fahrer durchgeführtes Wendemanöver kann dabei zu einem Sicherheitsrisiko für die Fahrzeuginsassen und für andere Verkehrsteilnehmer werden.

Das Dokument DE 10 2009 017 283 A1 schlägt einen Wendeassistenten für Kraftfahrzeuge vor, mit einer Steuerungsvorrichtung zur automatischen oder halbautomatischen Steuerung eines Wendemanövers des Kraftfahrzeuges, wobei mittels einer Bedieneinrichtung ein automatisches Wendemanöver für das Kraftfahrzeug einleitbar ist.

Das Dokument DE 10 2015 008 446 A1 beschreibt ebenfalls einen Fahrzeugassistenten zum automatischen Wenden des Fahrzeugs, wobei zusätzlich Verkehrsbedingungen in einem Umfeld des Kraftfahrzeugs erfasst werden. Es kann dann überprüft werden, ob ein Wendemanöver mit dem Kraftfahrzeug sicher durchführbar ist und das Wendemanöver nur dann automatisch ausgeführt wird.

Das Dokument US 2021 / 0197865 A1 stellt ein Verfahren für die Durchführung eines Drei-Punkt-Wendemanövers durch ein autonomes Fahrzeug vor, das den Wechsel zwischen einem fahrspurgebundenen Modus und einem offenen Modus ermöglicht, um das Fahrzeug sicher aus einer Sackgasse zu navigieren.

Der Erfindung liegt nun die Aufgabe zugrunde, einige der Nachteile des Standes der Technik zu überwinden oder zu reduzieren und ein Verfahren, eine Steuereinheit und ein Fahrzeug zur Unterstützung bei einem Wendeanliegen eines Fahrers bereitzustellen, um das Wenden in engen oder komplexen Verkehrssituationen zu optimieren.

Die erfindungsgemäße Aufgabe wird gelöst durch ein Verfahren, eine Steuereinheit und ein Fahrzeug gemäß den Patentansprüchen. Bevorzugte Weiterbildungen sind Gegenstand der Unteransprüche.

Ein erster Aspekt der vorliegenden Offenbarung betrifft ein Verfahren eines Fahrzeugs zur Unterstützung eines Fahrers bei einem Wendeanliegen. Ein Fahrzeug ist im Sinne dieser Offenbarung bevorzugt ein Personen- oder Lastkraftwagen mit Verbrennungs-, Elektro- oder Hybridmotor. Bevorzugt ist das Fahrzeug für einen vollständig oder teilweise autonomen Fahrbetrieb ausgebildet. Ein Wendeanliegen ist im Sinne dieser Offenbarung bevorzugt eine Notwendigkeit zu wenden, beispielsweise wegen einer Sperrung oder einer Sackgasse, oder ein Wunsch des Fahrers zu wenden, beispielsweise bei veränderten Verkehrsbedingungen oder geänderten Plänen des Fahrers.

In einem Schritt des Verfahrens wird zumindest ein Sensorwert zu einer Fahrzeugumgebung erfasst. Der Sensorwert wird mittels zumindest eines Sensors erfasst, der dazu ausgebildet ist, die Umgebung des Fahrzeugs betreffende Sensorsignale zu erfassen. Der zumindest eine Sensor ist bevorzugt eine Kamera, ein Lidar-Sensor, ein Radar-Sensor, ein Sonar, ein Laser und/oder ein Ultraschallsensor. Bevorzugt werden mehrere, die Fahrzeugumgebung betreffende Sensorwerte mit einem Ultraschallsensor und einer Kamera erfasst.

Als einen weiteren Schritt weist das Verfahren ein Erkennen eines Wendeanliegens an einer aktuellen Fahrzeugposition auf. Bevorzugt wird eine Notwendigkeit zu wenden, beispielsweise wegen einer Sperrung oder einer Sackgasse erkannt. Bevorzugt wird die Notwendigkeit zu wenden basierend auf dem zumindest einen Sensorwert erkannt. Ebenfalls bevorzugt wird ein Wunsch des Fahrers zu wenden, beispielsweise bei veränderten Verkehrsbedingungen oder geänderten Plänen des Fahrers, erkannt. Bevorzugt wird zunächst eine Nutzereingabe des Fahrers empfangen, bevorzugt mittels eines Eingabemittels des Fahrzeugs, wie beispielsweise einem Infotainment-System oder einem Druckschalter oder mittels einer Kommunikationseinheit des Fahrzeugs, die mit einem Nutzerendgerät des Fahrers kommuniziert. Mit anderen Worten wird die Nutzereingabe bevorzugt empfangen, während sich der Fahrer innerhalb des Fahrzeugs befindet. Alternativ bevorzugt befinden sich Fahrer und Nutzerendgerät während der Nutzereingabe außerhalb des Fahrzeugs. Basierend auf der Nutzereingabe wird bevorzugt der Wunsch des Fahrers zu wenden oder die Notwendigkeit zu wenden erkannt.

In einem weiteren Schritt des Verfahrens wird eine Durchführbarkeit eines Wendemanövers an der aktuellen Fahrzeugposition basierend auf dem zumindest einen Sensorwert ermittelt. Mit anderen Worten wird anhand des zumindest einen Sensorwertes ermittelt, ob ein Wendemanöver an der aktuellen Fahrzeugposition möglich ist. Bevorzugt wird anhand des zumindest einen Sensorwertes eine Abmessung eines verfügbaren Wenderaums an der aktuellen Fahrzeugposition ermittelt. Der Wenderaum ist bevorzugt der Platz, der rund um die aktuelle Fahrzeugposition für ein mögliches Wendemanöver zur Verfügung steht. Dann wird der verfügbare Wenderaum bevorzugt mit Abmessungen des Fahrzeugs verglichen, um die Durchführbarkeit des Wendemanövers zu ermitteln.

Als einen weiteren Schritt weist das Verfahren einen automatischen Rückfahrbetrieb des Fahrzeugs auf. Bevorzugt werden bei dem automatischen Rückfahrbetrieb Bewegungen, die das Fahrzeug auf der Fahrt zur aktuellen Fahrzeugposition im Vorwärtsbetrieb gemacht hat in umgekehrter Reihenfolge wiederholt. Mit anderen Worten wird die zuletzt absolvierte Fahrt zurückgespult. Dazu speichert das Fahrzeug bevorzugt kontinuierlich sein Bewegungsmuster einer vorbestimmten zuletzt gefahrenen Wegstrecke, beispielsweise der letzten 200 Meter. Ebenfalls bevorzugt werden ferner während des Rückfahrbetriebs Hindernisse erkannt, beispielsweise anhand von Sensorwerten des zumindest einen Sensors. Bevorzugt wird dann die Bewegung des Fahrzeugs angepasst, falls Hindernisse erkannt werden, um Kollisionen zu vermeiden.

Der automatische Rückfahrbetrieb wird bevorzugt durch eine Anleitung des Fahrers zum Rückfahrbetrieb durchgeführt. Ebenfalls bevorzugt wird der automatische Rückfahrbetrieb vollständig oder teilweise autonom durchgeführt. Dazu wird der automatische Rückfahrbetrieb bevorzugt durch eine automatische Steuerung des Antriebs und/oder der Lenkung des Fahrzeugs durchgeführt. Mit anderen Worten wird bevorzugt die Längs- und/oder Querführung des Fahrzeugs automatisch durchgeführt. Bevorzugt wird die Querführung beziehungsweise die Lenkung des Fahrzeugs automatisch durchgeführt und der Antrieb, also beispielsweise Gas geben, bremsen und/oder schalten, vom Fahrer übernommen. Bevorzugt liegt die Verantwortung während des automatischen Rückwärtsbetriebes beim Fahrer, nach den von der Society of Automotive Engineers (SAE) definierten Levels des autonomen Fahrens ist das Fahrzeug also bevorzugt als Level 2 oder niedriger einzuordnen. Alternativ bevorzugt liegt die Verantwortung während des automatischen Rückwärtsbetriebes beim Fahrzeug, das folglich als SAE-Level 3 oder höher einzuordnen ist.

Der automatische Rückfahrbetrieb wird nur durchgeführt, sofern an der aktuellen Fahrzeugposition ein Wendemanöver nicht durchführbar ist. Bevorzugt wird vor dem automatischen Rückfahrbetrieb ein Hinweis an den Fahrer ausgeben, beispielsweise mittels eines Ausgabemittels des Fahrzeugs oder mittels einer Kommunikationseinheit des Fahrzeugs, die mit einem Nutzerendgerät des Fahrers kommuniziert. Mit dem Hinweis wird der Fahrer bevorzugt informiert, dass eine automatische Rückwärtsfahrt folgt. Ebenfalls bevorzugt wird eine weitere Nutzereingabe empfangen, bevorzugt mittels eines Eingabemittels des Fahrzeugs, wie beispielsweise einem Infotainment-System oder einem Druckschalter oder mittels einer Kommunikationseinheit des Fahrzeugs, die mit dem Nutzerendgerät des Fahrers kommuniziert. Bevorzugt wird der automatische Rückfahrbetrieb basierend auf der weiteren Nutzereingabe durchgeführt, besonders bevorzugt nur dann, wenn der Fahrer den automatischen Rückfahrbetrieb mit der weiteren Nutzereingabe bestätigt hat.

Mit dem erfindungsgemäßen Verfahren kann ein Fahrer vorteilhaft bei einem Wendeanliegen unterstützt werden, insbesondere dann, wenn an der aktuellen Fahrzeugposition kein Wenden möglich ist. So kann eine Dead-Lock-Situation, insbesondere eine Situation in der ein Wenden des Fahrzeugs zwar nötig aber nicht möglich ist, mittels des Verfahrens unkompliziert aufgelöst werden, was die Benutzerfreundlichkeit und Fahrsicherheit des Fahrzeugs vorteilhaft erhöht.

In bevorzugter Ausgestaltung der Erfindung ist vorgesehen, dass das Verfahren ferner den Schritt des Erfassens, mittels des zumindest einen Sensors, einer Mehrzahl von Sensorwerten zu der Fahrzeugumgebung aufweist.

Die Mehrzahl von Sensorwerten weist bevorzugt Informationen über eine Vielzahl von Objekten in der Fahrzeugumgebung auf, beispielsweise andere Fahrzeuge, Fußgänger, Fahrbahnmarkierungen, Verkehrszeichen, Gebäude, Bäume oder andere Objekte. Ebenfalls bevorzugt weist die Mehrzahl von Sensorwerten Informationen über die Beschaffenheit der Fahrbahn, beispielsweise die Fahrbahnbreite, die Fahrbahnneigung, die Fahrbahnbeschaffenheit oder dergleichen auf. Bevorzugt findet die Erfassung der Sensorwerte in dieser Durchführungsform während der Rückwärtsfahrt des Fahrzeugs statt. Dies bedeutet, dass die Sensoren des Fahrzeugs bevorzugt aktiviert werden und beginnen, Daten zu sammeln, sobald das Fahrzeug in den Rückwärtsgang geschaltet wird.

Ferner weist das Verfahren bevorzugt ein Ermitteln eines zum Wenden des Fahrzeugs geeigneten Ortes basierend auf der Mehrzahl von Sensorwerten auf. Das Ermitteln eines zum Wenden des Fahrzeugs geeigneten Ortes erfolgt bevorzugt auf Basis der Mehrzahl von Sensorwerten. Bevorzugt wird ein Ort als zum Wenden geeignet ermittelt, wenn an diesem Ort genügend Platz für ein Wendemanöver vorhanden ist und/oder wenn das Wendemanöver an diesem Ort ohne Gefährdung anderer Verkehrsteilnehmer durchgeführt werden kann. Der zum Wenden geeignete Ort ist bevorzugt eine ausreichend breite Fahrbahn, eine ausreichend große Parklücke, eine ausreichend große Ausweichstelle oder dergleichen.

Der automatische Rückfahrbetrieb des Fahrzeugs wird bevorzugt bis zu dem zum Wenden des Fahrzeugs geeigneten Ort durchgeführt. Der automatische Rückfahrbetrieb wird bevorzugt solange durchgeführt, bis der zum Wenden geeignete Ort erreicht ist.

Bevorzugt werden bei dem automatischen Rückfahrbetrieb Bewegungen, die das Fahrzeug auf der Fahrt zur aktuellen Fahrzeugposition im Vorwärtsbetrieb gemacht hat in umgekehrter Reihenfolge wiederholt. Mit anderen Worten wird die zuletzt absolvierte Fahrt zurückgespult. Dazu speichert das Fahrzeug bevorzugt kontinuierlich sein Bewegungsmuster einer vorbestimmten zuletzt gefahrenen Wegstrecke, beispielsweise der letzten 200 Meter. Ebenfalls bevorzugt werden ferner während des Rückfahrbetriebs Hindernisse erkannt, beispielsweise anhand von Sensorwerten des zumindest einen Sensors. Bevorzugt wird dann die Bewegung des Fahrzeugs angepasst, falls Hindernisse erkannt werden, um Kollisionen zu vermeiden.

Der automatische Rückfahrbetrieb wird bevorzugt durch eine Anleitung des Fahrers zum Rückfahrbetrieb durchgeführt. Ebenfalls bevorzugt wird der automatische Rückfahrbetrieb vollständig oder teilweise autonom durchgeführt. Dazu wird der automatische Rückfahrbetrieb bevorzugt durch eine automatische Steuerung des Antriebs und/oder der Lenkung des Fahrzeugs durchgeführt. Mit anderen Worten wird bevorzugt die Längs- und/oder Querführung des Fahrzeugs automatisch durchgeführt. Bevorzugt wird die Querführung beziehungsweise die Lenkung des Fahrzeugs automatisch durchgeführt und der Antrieb, also beispielsweise Gas geben, bremsen und/oder schalten, vom Fahrer übernommen. Bevorzugt liegt die Verantwortung während des automatischen Rückwärtsbetriebes beim Fahrer, nach den von der Society of Automotive Engineers (SAE) definierten Levels des autonomen Fahrens ist das Fahrzeug also bevorzugt als Level 2 oder niedriger einzuordnen. Alternativ bevorzugt liegt die Verantwortung während des automatischen Rückwärtsbetriebes beim Fahrzeug, das folglich als SAE-Level 3 oder höher einzuordnen ist.

Ein wesentlicher Vorteil dieser Durchführungsform besteht darin, dass das Fahrzeug automatisch zu einem Ort fahren kann, der zum Wenden geeignet ist. Dies erhöht die Benutzerfreundlichkeit und Fahrsicherheit des Fahrzeugs erheblich.

Das Ermitteln des zum Wenden des Fahrzeugs geeigneten Ortes basierend auf der Mehrzahl von Sensorwerten weist in einer bevorzugten Durchführungsform die Schritte des Erstellens einer Umgebungskarte basierend auf der Mehrzahl von Sensorwerten und des Ermittelns des zum Wenden des Fahrzeugs geeigneten Ortes basierend auf der Umgebungskarte auf.

Die Mehrzahl von Sensorwerten werden in dieser Durchführungsform bevorzugt kontinuierlich ermittelt, besonders bevorzugt auch während der Vorwärtsfahrt des Fahrzeugs. Bevorzugt werden die Sensorwerte kontinuierlich ermittelt während das Fahrzeug mit einer Geschwindigkeit von weniger als 40 km/h fährt.

Die Umgebungskarte ist bevorzugt eine Darstellung der Fahrzeugumgebung auf Basis der von den Sensoren erfassten Sensorwerte, beispielsweise eine zweidimensionale oder dreidimensionale Darstellung der Fahrzeugumgebung. Die Fahrzeugumgebung weist bevorzugt eine zuletzt zurückgelegte Wegstrecke des Fahrzeugs auf, bevorzugt die zuletzt gefahrenen 200 Meter. Die Umgebungskarte weist also mit anderen Worten bevorzugt Informationen über die Platzverhältnisse der letzten 200 Meter, die das Fahrzeug zurückgelegt hat, auf. Dies bedeutet, dass die Umgebungskarte vorteilhaft ständig aktualisiert wird, um die neuesten Informationen über die Platzverhältnisse in der unmittelbaren Umgebung des Fahrzeugs zu enthalten. Die Umgebungskarte weist bevorzugt die Positionen und/oder Abmessungen von Objekten in der Fahrzeugumgebung, beispielsweise andere Fahrzeuge, Fußgänger, Fahrbahnmarkierungen, Verkehrszeichen, Gebäude, Bäume oder andere Objekte auf.

Bevorzugt ist die Umgebungskarte eine sogenannte Parkraumkarte. Diese Parkraumkarte ist bevorzugt eine spezielle Art von Umgebungskarte, die speziell auf die Erfassung von Informationen über potenzielle Parkplätze und andere Platzverhältnisse in der unmittelbaren Umgebung des Fahrzeugs ausgerichtet ist und für einen ebenfalls im Fahrzeug eingerichteten Parkassistenten verwendet wird. Die Parkraumkarte kann beispielsweise Informationen über die Positionen und Abmessungen von Parkplätzen, die Breite der Fahrbahn, die Positionen und Abmessungen von anderen Fahrzeugen, Fußgängern, Fahrbahnmarkierungen, Verkehrszeichen, Gebäuden, Bäumen und anderen Objekten enthalten.

Das Ermitteln des zum Wenden des Fahrzeugs geeigneten Ortes basierend auf der Umgebungskarte erfolgt bevorzugt durch eine Suche nach einem Ort auf der Umgebungskarte, an dem genügend Platz für ein Wendemanöver vorhanden ist und/oder an dem das Wendemanöver ohne Gefährdung anderer Verkehrsteilnehmer durchgeführt werden kann. Der zum Wenden geeignete Ort wird bevorzugt durch eine Suche nach einem Ort auf der Umgebungskarte ermittelt, an dem keine oder nur wenige Objekte vorhanden sind. Der zum Wenden geeignete Ort wird ebenfalls bevorzugt durch eine Suche nach einem Ort auf der Umgebungskarte ermittelt, an dem die Fahrbahn breit genug für ein Wendemanöver ist.

Diese bevorzugte Durchführungsform hat den Vorteil, dass das Fahrzeug eine Umgebungskarte erstellen oder sogar die für eine Einparkhilfe erstellte Parkraumkarte nutzen kann, um den zum Wenden des Fahrzeugs geeigneten Ort zu finden. Dies erhöht die Effizienz und Genauigkeit des Verfahrens.

Das Verfahren weist in einer ebenfalls bevorzugten Durchführungsform weiter den Schritt des Berechnens eines idealen Wendemanövers an dem Ort basierend auf der Mehrzahl von Sensorwerten auf. Das ideale Wendemanöver ist im Sinne dieser Offenbarung bevorzugt ein Wendemanöver, das mit der geringstmöglichen Anzahl von Lenkbewegungen und/oder in der kürzestmöglichen Zeit durchgeführt werden kann. Ebenfalls bevorzugt ist das ideale Wendemanöver ein Wendemanöver, das ohne Gefährdung anderer Verkehrsteilnehmer durchgeführt werden kann. Bevorzugt weist das ideale Wendemanöver ein Manöver auf, bei dem das Fahrzeug um 180° gedreht wird. Dieses spezifische Manöver kann als ideales Wendemanöver angesehen werden, da es das Fahrzeug in die entgegengesetzte Richtung lenkt, was in bestimmten Situationen, wie zum Beispiel in einer Sackgasse oder bei einer unerwarteten Straßensperre, nützlich sein kann.

Die Berechnung des idealen Wendemanövers erfolgt bevorzugt auf der Grundlage der Umgebungskarte, bevorzugt auf der Grundlage der in der Umgebungskarte gespeicherten Positionen und/oder Abmessungen von Objekten in der Fahrzeugumgebung, beispielsweise andere Fahrzeuge, Fußgänger, Fahrbahnmarkierungen, Verkehrszeichen, Gebäude, Bäume oder andere Objekte. Die Berechnung des idealen Wendemanövers erfolgt ebenfalls bevorzugt auf der Grundlage der Beschaffenheit der Fahrbahn, beispielsweise der Fahrbahnbreite, der Fahrbahnneigung, der Fahrbahnbeschaffenheit oder dergleichen. Bevorzugt wird das Wendemanöver zusätzlich basierend auf der Information berechnet, ob an der aktuellen Fahrzeugposition Rechts- oder Linksverkehr herrscht.

Ferner weist das Verfahren in dieser bevorzugten Ausführungsform ein Starten des Wendemanövers an dem Ort auf.

Bevorzugt wird das Wendemanöver durch eine Benachrichtigung des Fahrers gestartet, das Wendemanöver jetzt zu starten, beispielsweise mittels eines Ausgabemittels des Fahrzeugs oder mittels einer Kommunikationseinheit des Fahrzeugs, die mit einem Nutzerendgerät des Fahrers kommuniziert. Die Benachrichtigung ist bevorzugt ein akustisches Signal, eine visuelle Anzeige oder eine andere geeignete Benachrichtigungsmethode.

Alternativ bevorzugt wird das Wendemanöver gestartet, indem das Fahrzeug die Kontrolle übernimmt und das Wendemanöver selbstständig startet, bevorzugt durch eine automatische Steuerung des Antriebs und/oder der Lenkung des Fahrzeugs.

Diese beiden Methoden zum Starten des Wendemanövers werden bevorzugt je nach den spezifischen Umständen und Anforderungen ausgewählt. Beispielsweise kann in Situationen, in denen der Fahrer das Fahrzeug aktiv steuert, die Methode der Benachrichtigung des Fahrers bevorzugt werden. In Situationen, in denen das Fahrzeug autonom fährt, kann die Methode der automatischen Steuerung des Wendemanövers bevorzugt werden.

Mit dieser bevorzugten Durchführungsform des Verfahrens kann das Fahrzeug folglich vorteilhaft ein optimales Wendemanöver berechnen und starten, um den Fahrer noch besser bei einem Wendeanliegen zu unterstützen.

In weiterer bevorzugter Ausgestaltung des Verfahrens ist vorgesehen, dass aktuelle Verkehrsbedingungen basierend auf der Mehrzahl von Sensorwerten ermittelt werden, wobei das Wendemanöver gestartet wird, wenn die Verkehrsbedingungen ein gefahrloses Wenden erlauben.

Die aktuellen Verkehrsbedingungen betreffen im Sinne dieser Offenbarung bevorzugt den Verkehrsfluss, die Anzahl und Position von anderen Fahrzeugen, die Anzahl und Position von Fußgängern, die Anzahl und Position von Fahrradfahrern, die Anzahl und Position von Verkehrszeichen, die Anzahl und Position von Ampeln, die Anzahl und Position von Straßenmarkierungen, die Anzahl und Position von Gebäuden, Bäumen oder anderen Objekten in der Fahrzeugumgebung.

Das Ermitteln der aktuellen Verkehrsbedingungen erfolgt bevorzugt durch eine Analyse der Mehrzahl von Sensorwerten. Die Analyse der Sensorwerte wird bevorzugt durch eine Steuereinheit des Fahrzeugs durchgeführt.

Ebenfalls bevorzugt wird das Wendemanöver abgebrochen, wenn sich die Verkehrsbedingungen ändern und eine Gefahrensituation entsteht. Eine geänderte Verkehrsbedingung ist im Sinne dieser Offenbarung bevorzugt eine plötzliche Zunahme des Verkehrsflusses, das Auftauchen von weiteren Fahrzeugen, Fußgängern oder Fahrradfahrern, das Ändern der Position von Verkehrszeichen oder Ampeln, das Auftauchen von neuen Straßenmarkierungen oder das Auftauchen von Gebäuden, Bäumen oder anderen Objekten in der Fahrzeugumgebung. Eine Gefahrensituation ist im Sinne dieser Offenbarung bevorzugt eine drohende Kollision mit einem anderen Fahrzeug, einem Fußgänger, einem Fahrradfahrer oder einem anderen Objekt in der Fahrzeugumgebung oder eine Situation, in der das Fahrzeug gegen Verkehrsregeln verstoßen würde, beispielsweise durch das Missachten von Verkehrszeichen oder Ampeln.

Das Abbrechen des Wendemanövers erfolgt bevorzugt automatisch durch die Steuerungseinheit des Fahrzeugs, sobald basierend auf der Mehrzahl von Sensorwerten eine Änderung der Verkehrsbedingungen und eine daraus resultierende Gefahrensituation erkannt wurde. Ebenfalls bevorzugt erfolgt das Abbrechen durch eine manuelle Betätigung eines Bedienelements durch den Fahrer.

Mit anderen Worten umfasst das Verfahren nicht nur das Starten des Wendemanövers unter sicheren Verkehrsbedingungen, sondern auch die Fähigkeit, das Manöver abzubrechen, wenn die Bedingungen sich ändern und eine Gefahr darstellen. Dies hat den Vorteil, dass die Sicherheit während des Wendemanövers weiter erhöht wird, da Kollisionen mit anderen Fahrzeugen, Fußgängern, Fahrradfahrern oder anderen Objekten in der Fahrzeugumgebung oder Verkehrsverstöße, wie beispielsweise das Missachten von Verkehrszeichen oder Ampeln, vermieden werden können.

In einer ebenfalls bevorzugten Ausführungsform wird in einem weiteres Schritt des Verfahrens das Wendemanöver automatisch durchgeführt.

Das automatische Durchführen des Wendemanövers erfolgt bevorzugt durch eine automatische Steuerung des Antriebs und/oder der Lenkung des Fahrzeugs, bevorzugt durch eine Steuereinheit des Fahrzeugs. Das automatische Durchführen des Wendemanövers wird bevorzugt ferner durch eine automatische Steuerung anderer Komponenten des Fahrzeugs, beispielsweise der Bremsen, der Lichter, der Warnblinkanlage oder dergleichen, unterstützt. Die automatische Steuerung erfolgt bevorzugt auf der Grundlage des basierend auf der Mehrzahl von Sensorwerten berechneten idealen Wendemanövers. Bevorzugt ist das Fahrzeug ein vollständig autonomes Fahrzeug und das Wendemanöver wird automatisch durch das Fahrzeug durchgeführt.

Ebenfalls bevorzugt wird nach der Durchführung des Wendemanövers die Fahraufgabe wieder an den Fahrer übergeben. Mit anderen Worten greift das Fahrzeug nach Abschluss des Wendemanövers nicht mehr in den Fahrbetrieb ein und der Fahrer kann das Fahrzeug wieder selbständig beschleunigen und lenken. Bevorzugt wird vor dem Übergeben der Fahraufgabe ein Hinweis an den Fahrer ausgeben, beispielsweise mittels eines Ausgabemittels des Fahrzeugs oder mittels einer Kommunikationseinheit des Fahrzeugs, die mit einem Nutzerendgerät des Fahrers kommuniziert. Mit dem Hinweis wird der Fahrer bevorzugt informiert, dass er nun wieder selbständig lenken und beschleunigen kann. Ebenfalls bevorzugt wird eine weitere Nutzereingabe empfangen, bevorzugt mittels eines Eingabemittels des Fahrzeugs, wie beispielsweise einem Infotainment-System oder einem Druckschalter oder mittels einer Kommunikationseinheit des Fahrzeugs, die mit einem Nutzerendgerät des Fahrers kommuniziert. Bevorzugt wird das Übergeben der Fahraufgabe basierend auf der weiteren Nutzereingabe durchgeführt, besonders bevorzugt nur dann, wenn der Fahrer das Übergeben der Fahraufgabe mit der weiteren Nutzereingabe bestätigt hat.

Alternativ bevorzugt weist das Verfahren ein Anleiten des Fahrers zur Durchführung des Wendemanövers auf, beispielsweise mittels eines Ausgabemittels des Fahrzeugs oder mittels einer Kommunikationseinheit des Fahrzeugs, die mit einem Nutzerendgerät des Fahrers kommuniziert. Das Wendemanöver wird in diesem Fall bevorzugt zumindest teilweise manuell durch den Fahrer durchgeführt. Das Anleiten des Fahrers zur Durchführung des Wendemanövers erfolgt bevorzugt durch eine Anzeige auf einem Display des Fahrzeugs oder des Nutzerendgeräts, durch akustische Signale, durch haptische Signale oder durch andere geeignete Mittel, wie beispielsweise durch eine Sprachausgabe.

Ebenfalls bevorzugt wird während des Wendemanövers die Querführung beziehungsweise die Lenkung des Fahrzeugs automatisch durchgeführt und der Antrieb, also beispielsweise Gas geben, bremsen und/oder schalten, vom Fahrer übernommen. Bevorzugt liegt die Verantwortung während des Wendemanövers beim Fahrer (SAE-Level 2 oder niedriger). Alternativ bevorzugt liegt die Verantwortung während des automatischen Rückwärtsbetriebes beim Fahrzeug (SAE-Level 3 oder höher).

Diese bevorzugte Durchführungsform des Verfahrens hat den Vorteil, dass das vorher berechnete ideale Wendemanöver automatisch durchgeführt werden kann oder der Fahrer angeleitet werden kann, es durchzuführen. Dies bedeutet, dass das Verfahren sowohl für Fahrzeuge, die für einen vollständig autonomen Betrieb ausgelegt sind, als auch für Fahrzeuge, die von einem menschlichen Fahrer gesteuert werden, geeignet ist. Das automatische Durchführen des Wendemanövers und das Anleiten des Fahrers zur Durchführung des Wendemanövers können dazu beitragen, das Wendemanöver sicher und effizient durchzuführen.

Das Verfahren weist bevorzugt weiter den Schritt des Ausgebens eines Hinweises mittels eines Ausgabemittels des Fahrzeugs auf.

Der Hinweis dient bevorzugt dazu, den Fahrer darüber zu informieren, dass ein Wendemanöver durchgeführt werden soll. Ebenfalls bevorzugt dient der Hinweis dazu, den Fahrer darüber zu informieren, dass das Fahrzeug bereit ist, ein Wendemanöver durchzuführen. Der Hinweis dient ebenfalls bevorzugt dazu, den Fahrer darüber zu informieren, dass das Fahrzeug ein Wendemanöver durchführen wird, wenn der Fahrer nicht innerhalb einer bestimmten Zeit reagiert. Bevorzugt wird der Hinweis in Form einer Pop-up-Nachricht ausgegeben, wenn genügend Platz zum Umdrehen vorhanden ist. Ebenfalls bevorzugt weist der Hinweis eine Aufforderung zur Nutzereingabe auf, um das Wendemanöver zu starten oder zu bestätigen.

Die Ausgabe des Hinweises erfolgt bevorzugt über das Ausgabemittel des Fahrzeugs oder ein Nutzerendgerät, wie beispielsweise ein Smartphone oder Tablet. Das Ausgabemittel ist bevorzugt ein Display, ein Lautsprecher, eine Leuchte, ein Vibrationsmotor oder ein anderes geeignetes Ausgabegerät. Das Ausgabemittel ist bevorzugt dazu ausgebildet, den Hinweis visuell, akustisch, haptisch oder auf andere geeignete Weise auszugeben.

Ferner weist die bevorzugte Durchführungsform ein Empfangen einer Nutzereingabe mittels eines Eingabemittels des Fahrzeugs auf. Die Nutzereingabe dient bevorzugt dazu, das Wendemanöver zu starten. Die Nutzereingabe dient ebenfalls bevorzugt dazu, das Wendemanöver zu bestätigen oder abzubrechen. Ebenfalls bevorzugt dient die Nutzereingabe dazu, die Richtung des Wendemanövers zu bestimmen.

Die Nutzereingabe wird bevorzugt mittels eines Eingabemittels des Fahrzeugs empfangen, wie beispielsweise einem Tastenfeld, einem Touchscreen, einem Drehknopf, einem Schalter, einem Mikrofon oder einem anderen geeigneten Eingabegerät oder mittels einer Kommunikationseinheit des Fahrzeugs, die mit einem Nutzerendgerät des Fahrers kommuniziert. Das Eingabemittel ist bevorzugt dazu ausgebildet, die Nutzereingabe in Form einer Tastenbetätigung, einer Berührung, einer Drehbewegung, einer Schalterstellung, einer Spracheingabe oder auf andere geeignete Weise zu empfangen.

Das Wendemanöver wird in dieser bevorzugten Durchführungsform basierend auf der Nutzereingabe gestartet. Bevorzugt wird das Wendemanöver nur dann gestartet, wenn es durch die Nutzereingabe bestätigt wurde.

Durch die bevorzugte Durchführungsform des Verfahrens kann das Wendemanöver vorteilhaft auf besonders benutzerfreundliche Weise durchgeführt werden, da der Fahrer mit Hinweisen informiert wird, bevor das Fahrzeug das Wendemanöver startet und durch Nutzereingaben die Durchführung steuern kann.

In einer weiteren bevorzugten Durchführungsform des Verfahrens gemäß der vorliegenden Offenbarung kann das Verfahren jederzeit durch den Fahrer beendet werden.

Bevorzugt wird eine weitere Nutzereingabe des Fahrers empfangen, bevorzugt mittels eines Eingabemittels des Fahrzeugs, wie beispielsweise einem Infotainment-System oder einem Druckschalter oder mittels einer Kommunikationseinheit des Fahrzeugs, die mit einem Nutzerendgerät des Fahrers kommuniziert. Dazu wird beispielsweise ein Bedienelement durch den Fahrer betätigt oder es erfolgt eine Spracheingabe des Fahrers. Basierend auf der weiteren Nutzereingabe wird bevorzugt das Verfahren beendet.

Das Beenden des Verfahrens durch den Fahrer dient bevorzugt dazu, das Wendemanöver abzubrechen, wenn der Fahrer dies für notwendig hält. Das Beenden des Verfahrens durch den Fahrer dient ebenfalls bevorzugt dazu, das Fahrzeug in einen normalen Fahrmodus zurückzusetzen, in dem der Fahrer die volle Kontrolle über das Fahrzeug hat.

Ein wichtiger Kontext, in dem das Verfahren beendet werden kann, ist, wenn der Fahrer das Wendemanöver abbrechen möchte. Dies kann aus verschiedenen Gründen geschehen, beispielsweise wenn der Fahrer eine Gefahrensituation erkennt oder wenn er seine Entscheidung über das Wendemanöver ändert. In solchen Fällen kann der Fahrer das Verfahren durch eine Nutzereingabe beenden, um das Wendemanöver abzubrechen, was vorteilhaft die Fahrsicherheit während des Verfahrens erhöht.

In einer bevorzugten Durchführungsform kann ein wie vorab beschriebenes Verfahren durchgeführt werden, während sich der Fahrer außerhalb des Fahrzeugs befindet und mittels Nutzereingaben, die von dem Nutzerendgerät empfangen und an das Fahrzeug gesendet werden, das Verfahren steuert.

Ein weiterer Aspekt der vorliegenden Offenbarung betrifft eine Steuereinheit. Die Steuereinheit ist bevorzugt ein Mikroprozessor, ein Mikrocontroller, ein digitaler Signalprozessor, ein anwendungsspezifischer integrierter Schaltkreis (ASIC), ein Field Programmable Gate Array (FPGA) oder ein anderes geeignetes elektronisches Gerät. Die Steuereinheit ist ausgebildet zum Durchführen eines wie vorstehend beschriebenen Verfahrens. Dazu ist die Steuereinheit bevorzugt dazu ausgebildet, mit den Sensoren des Fahrzeugs, mit einem Antriebssystem des Fahrzeugs, mit einem Lenksystem des Fahrzeugs, mit einem Eingabemittel des Fahrzeugs, mit einem Ausgabemittel des Fahrzeugs, mit einem Speicher des Fahrzeugs, mit einer Kommunikationseinheit des Fahrzeugs und/oder mit anderen Komponenten des Fahrzeugs zu kommunizieren.

Bevorzugte Ausführungsformen der beanspruchten Steuereinheit entsprechen sinngemäß den oben beschriebenen bevorzugten Durchführungsformen des erfindungsgemäßen Verfahrens und erzielen dieselben Vorteile. Auf eine erneute detaillierte Beschreibung wird daher verzichtet.

Ein weiterer Aspekt der vorliegenden Offenbarung betrifft ein Fahrzeug, bevorzugt ein Personen- oder Lastkraftwagen mit Verbrennungs-, Elektro- oder Hybridmotor. Bevorzugt ist das Fahrzeug für einen vollständig oder teilweise autonomen Fahrbetrieb ausgebildet.

Das Fahrzeug weist zumindest einen Sensor auf, der zum Erfassen von Sensorwerten zu einer Fahrzeugumgebung ausgebildet ist. Der zumindest eine Sensor ist bevorzugt eine Kamera, ein Lidar-Sensor, ein Radar-Sensor, ein Sonar, ein Laser und/oder ein Ultraschallsensor. Ferner weist das Fahrzeug eine wie vorstehend beschriebene Steuereinheit auf, die zum Durchführen eines wie vorstehend beschriebenen Verfahrens ausgebildet ist. Dazu kommuniziert die Steuereinheit bevorzugt mit dem zumindest einen Sensor.

Bevorzugt weist das Fahrzeug ferner ein Eingabemittel, ein Ausgabemittel, einen Speicher und/oder eine Kommunikationseinheit auf. Die Steuereinheit kommuniziert bevorzugt mit dem Eingabemittel, dem Ausgabemittel, dem Speicher und/oder der Kommunikationseinheit um das wie vorstehend beschriebene Verfahren durchzuführen.

Bevorzugte Ausführungsformen des beanspruchten Fahrzeugs entsprechen sinngemäß den oben beschriebenen bevorzugten Durchführungsformen des erfindungsgemäßen Verfahrens und erzielen dieselben Vorteile. Auf eine erneute detaillierte Beschreibung wird daher verzichtet.

Ein weiterer Aspekt der vorliegenden Offenbarung betrifft ein Computerprogramm, umfassend Befehle, die bei der Ausführung des Programms durch einen Computer, wie beispielsweise eine wie vorstehend beschriebene Steuereinheit eines wie vorstehend beschriebenen Fahrzeugs, diesen veranlassen, das erfindungsgemäße Verfahren eines Fahrzeugs zur Unterstützung eines Fahrers bei einem Wendeanliegen, wie vorab beschrieben, auszuführen.

Ein weiterer Aspekt der vorliegenden Offenbarung betrifft ein computerlesbares Speichermedium, umfassend Befehle, die bei der Ausführung durch einen Computer, wie beispielsweise eine wie vorstehend beschriebene Steuereinheit eines wie vorstehend beschriebenen Fahrzeugs, diesen veranlassen, das erfindungsgemäße Verfahren eines Fahrzeugs zur Unterstützung eines Fahrers bei einem Wendeanliegen, wie vorab beschrieben, auszuführen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein schematisches Ablaufdiagramm eines erfindungsgemäßen Verfahrens eines Fahrzeugs zur Unterstützung eines Fahrers bei einem Wendeanliegen in einer beispielhaften Durchführungsform;
- Figur 2: eine schematische Darstellung eines erfindungsgemäßen Fahrzeugs gemäß einer beispielhaften Ausführungsform;
- Figur 3: eine bildliche Darstellung des erfindungsgemäßen Verfahrens in einer weiteren beispielhaften Durchführungsform;

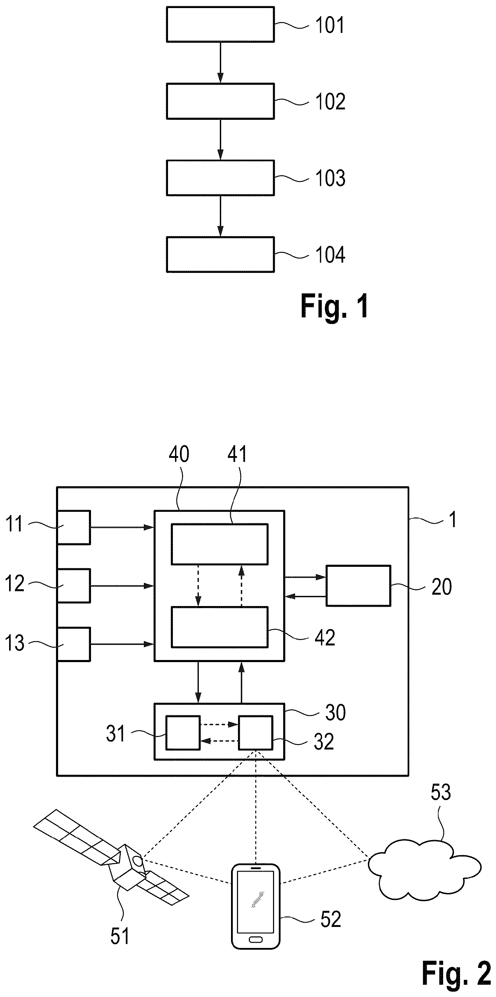

Figur 1 zeigt ein schematisches Ablaufdiagramm eines erfindungsgemäßen Verfahrens eines Fahrzeugs zur Unterstützung eines Fahrers bei einem Wendeanliegen in einer beispielhaften Durchführungsform. Das Fahrzeug ist insbesondere ein Personen- oder Lastkraftwagen mit Verbrennungs-, Elektro- oder Hybridmotor, der für einen vollständig oder teilweise autonomen Fahrbetrieb ausgebildet ist.

In einem Schritt 101 des Verfahrens wird zumindest ein Sensorwert zu einer Fahrzeugumgebung erfasst. Der Sensorwert wird mittels zumindest eines Sensors erfasst, der dazu ausgebildet ist, die Umgebung des Fahrzeugs betreffende Sensorsignale zu erfassen. Der zumindest eine Sensor ist beispielsweise eine Kamera, ein Lidar-Sensor, ein Radar-Sensor, ein Sonar, ein Laser und/oder ein Ultraschallsensor.

Als einen weiteren Schritt 102 weist das Verfahren ein Erkennen eines Wendeanliegens an einer aktuellen Fahrzeugposition auf. Insbesondere wird eine Notwendigkeit zu wenden, beispielsweise wegen einer Sperrung oder einer Sackgasse oder ein Wunsch des Fahrers zu wenden, beispielsweise bei veränderten Verkehrsbedingungen oder geänderten Plänen des Fahrers, erkannt, beispielsweise anhand einer Nutzereingabe.

In einem weiteren Schritt 103 des Verfahrens wird eine Durchführbarkeit eines Wendemanövers an der aktuellen Fahrzeugposition basierend auf dem zumindest einen Sensorwert ermittelt. Mit anderen Worten wird anhand des zumindest einen Sensorwertes ermittelt, ob ein Wendemanöver an der aktuellen Fahrzeugposition möglich ist.

Als einen weiteren Schritt 104 weist das Verfahren einen automatischen Rückfahrbetrieb des Fahrzeugs auf. Insbesondere werden bei dem automatischen Rückfahrbetrieb Bewegungen, die das Fahrzeug auf der Fahrt zur aktuellen Fahrzeugposition im Vorwärtsbetrieb gemacht hat in umgekehrter Reihenfolge wiederholt. Ferner werden während des Rückfahrbetriebs Hindernisse erkannt und die Bewegung des Fahrzeugs gegebenenfalls angepasst, um Kollisionen zu vermeiden.

Der automatische Rückfahrbetrieb wird in Schritt 104 nur durchgeführt, sofern im Schritt 103 ermittelt wurde, dass an der aktuellen Fahrzeugposition ein Wendemanöver nicht durchführbar ist.

Figur 2 zeigt eine schematische Darstellung, insbesondere ein Blockdiagramm eines beispielhaften Fahrzeugs 1, insbesondere eines zweispurigen Kraftfahrzeugs mit Verbrennungs-, Elektro- oder Hybridmotor, das für einen vollständig oder teilweise autonomen Fahrbetrieb ausgebildet ist. Das Fahrzeug 1 ist ferner dazu ausgebildet, ein erfindungsgemäßes Verfahren zur Unterstützung eines Fahrers bei einem Wendeanliegen, wie vorstehend beschrieben und in Figur 1 gezeigt, durchzuführen.

Dazu weist das Fahrzeug 1 zunächst eine Vielzahl erster Sensoren auf, insbesondere einen ersten Sensor 11, einen zweiten Sensor 12 und einen dritten Sensor 13. Die ersten Sensoren 11, 12, 13 sind eingerichtet zum Erfassen von Umgebungsdaten des Fahrzeugs 1 und umfassen beispielsweise eine Kamera zum Erfassen von Bildern einer Umgebung des Fahrzeugs 1, und/oder Abstandssensoren, wie beispielsweise Ultraschallsensoren, zum Erfassen von Abständen zu das Fahrzeug 1 umgebenden Objekten. Die ersten Sensoren 11, 12, 13 übertragen die von ihnen erfassten Sensorwerte zur Fahrzeugumgebung an eine Steuereinheit 40 des Fahrzeugs 1.

Die Steuereinheit 40 kommuniziert auch mit einem Ein- und Ausgabemittel 20 des Fahrzeugs 1. Mittels des Ein- und Ausgabemittels 20 des Fahrzeugs 1 kann die Steuereinheit 40 Hinweise an Fahrzeuginsassen ausgeben und Nutzereingaben empfangen.

Das Fahrzeug 1 weist ferner ein Kommunikationsmodul 30 mit einem Speicher 31 und einem oder mehreren Transpondern beziehungsweise Sendeempfängern 32 auf. Bei dem Transponder 32 handelt es sich um einen Funk-, WLAN-, GPS- oder Bluetooth-Sendeempfänger oder dergleichen, insbesondere um einen zur Kommunikation in einem Kommunikationsnetzwerk eingerichteten Transponder. Der Transponder kommuniziert mit dem internen Speicher 31 des Kommunikationsmoduls 30, beispielsweise über einen geeigneten Datenbus. Mittels des Transponders 32 kann beispielsweise die aktuelle Position des Fahrzeugs 1 durch Kommunikation mit einem GPS-Satelliten 51 ermittelt und diese im internen Speicher 31 gespeichert werden. Darüber hinaus ist das Kommunikationsmodul 30 dafür eingerichtet, mit einem Nutzerendgerät 52 zu kommunizieren, insbesondere auch über ein Kommunikationsnetzwerk 53. Ferner kann das Kommunikationsmodul 30 auch zur Kommunikation mit einem Server des Kommunikationsnetzwerks 53 eingerichtet sein. Das Kommunikationsmodul 30 kommuniziert auch mit der Steuereinheit 40. Insbesondere übermittelt es dieser empfangene Daten und/oder empfängt von dieser zu sendende Daten.

Bei dem Kommunikationsnetzwerk 53 handelt es sich bevorzugt um ein Netzwerk gemäß 3GPP-Standard, beispielsweise um ein LTE, LTE-A (4G) oder 5G Kommunikationsnetzwerk. Das Kommunikationsnetzwerk kann ferner für die folgenden Operationen beziehungsweise gemäß der folgenden Standards ausgelegt sein: High Speed Packet Access (HSPA), a Universal Mobile Telecommunication System (UMTS), UMTS Terrestrial Radio Access Network (UTRAN), evolved-UTRAN (e-UTRAN), Global System for Mobile communication (GSM), Enhanced Data rates for GSM Evolution (EDGE), GSM/EDGE Radio Access Network (GERAN). Alternativ oder zusätzlich kann das Kommunikationsnetzwerk 52 auch gemäß einem der folgenden Standards ausgebildet sein: Worldwide Inter-operability for Microwave Access (WIMAX) network IEEE 802.16, Wireless Local Area Network (WLAN) IEEE 802.11. Ebenfalls bevorzugt verwendet das Kommunikationsnetzwerk 52 eine der folgenden Kodierungsverfahren: Orthogonal Frequency Division Multiple Access (OFDMA), Time Division Multiple Access (TDMA), Code Division Multiple Access (CDMA), a Wideband-CDMA (WCDMA), Frequency Division Multiple Access (FDMA) oder Spatial Division Multiple Access (SDMA) etc.

Die Steuereinheit 40 ist dazu ausgebildet, das erfindungsgemäße Verfahren, wie vorstehend beschrieben, durchzuführen. Hierzu verfügt die Steuereinheit 40 über einen internen Speicher 41 und eine CPU 42, welche miteinander kommunizieren, beispielsweise über einen geeigneten Datenbus. Ferner steht die Steuereinheit 40 hierzu in Kommunikationsverbindung mit zumindest den ersten Sensoren 11, 12, 13, dem Ein- und Ausgabemittel 20 und dem Kommunikationsmodul 30, beispielsweise über eine oder mehrere jeweilige CAN-Verbindungen, eine oder mehrere jeweilige SPI-Verbindungen oder andere geeignete Datenverbindungen.

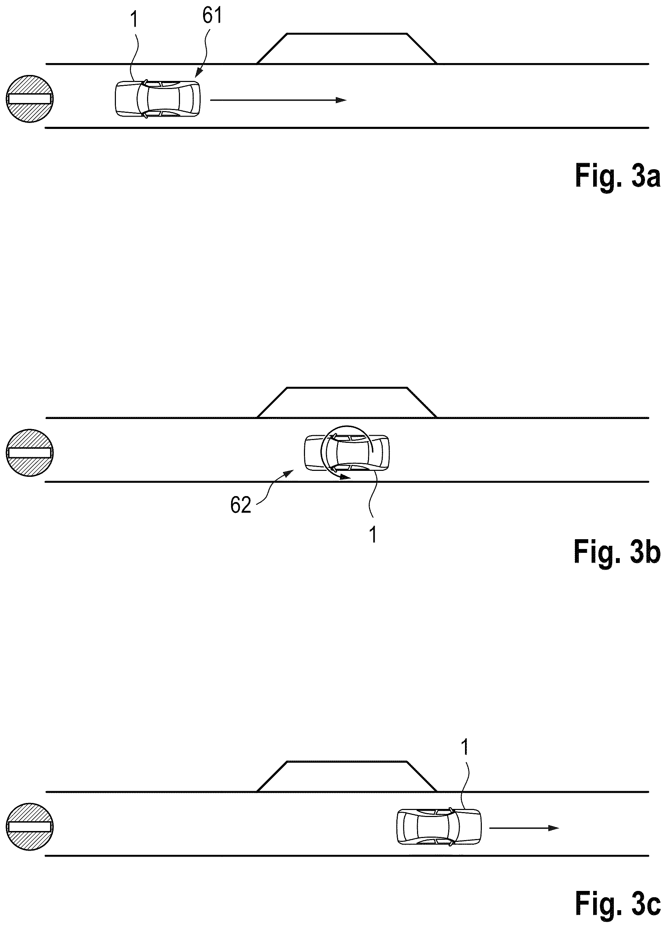

Figur 3 zeigt eine bildliche Darstellung des erfindungsgemäßen Verfahrens in einer weiteren beispielhaften Durchführungsform.

In Figur 3a erfasst das Fahrzeug 1 einen Sensorwert zur Fahrzeugumgebung und erkennt ein Wendeanliegen an der aktuellen Fahrzeugposition 61. Insbesondere wird hier eine Notwendigkeit zu wenden, wegen des Durchfahrt-verboten-Schildes anhand des Sensorwertes erkannt.

Ferner ermittelt das Fahrzeug 1 eine Durchführbarkeit eines Wendemanövers an der aktuellen Fahrzeugposition 61 basierend auf dem zumindest einen Sensorwert. Weil das Fahrzeug dabei ermittelt, dass an der aktuellen Fahrzeugposition 61 ein Wendemanöver nicht durchführbar ist, führt es dann einen automatischen Rückfahrbetrieb durch, der durch den Pfeil bildlich dargestellt ist.

Während des Rückfahrbetriebs oder bereits bei der Fahrt zu der aktuellen Fahrzeugposition 61 erfasst das Fahrzeug 1 eine Mehrzahl von Sensorwerten. Basierend auf dieser Mehrzahl von Sensorwerten wird ein zum Wenden des Fahrzeugs geeigneter Ort 62 ermittelt, der in Figur 3b dargestellt ist. Der automatische Rückfahrbetrieb wird bis zu dem Ort 62 durchgeführt.

Basierend auf der Mehrzahl von Sensorwerten wird dann ein ideales Wendemanöver an dem Ort 62 berechnet und aktuelle Verkehrsbedingungen ermittelt. Weil die Verkehrsbedingungen ein gefahrloses Wenden erlauben, wird das berechnete Wendemanöver dann gestartet, was durch den Pfeil in Figur 3b bildlich dargestellt ist. Das Wendemanöver wird dann automatisch durchgeführt oder der Fahrer zur Durchführung des Wendemanövers angeleitet.

Nachdem das Wendemanöver abgeschlossen ist, kann die Fahrt mit einem um 180° gedrehten Fahrzeug fortgesetzt werden, wie in Figur 3c dargestellt.

### Bezugszeichenliste

- 1: Fahrzeug
- 11: erster Sensor
- 12: zweiter Sensor
- 13: dritter Sensor
- 20: Ein- und Ausgabemittel
- 30: Kommunikationseinheit
- 31: interner Speicher
- 32: Sendeempfänger
- 40: Steuereinheit
- 41: interner Speicher
- 42: CPU
- 51: Satellit
- 52: Nutzerendgerät
- 53: Netzwerk
- 61: Fahrzeugposition
- 62: Ort
- 101: erster Verfahrensschritt
- 102: zweiter Verfahrensschritt
- 103: dritter Verfahrensschritt
- 104: vierter Verfahrensschritt

## Patentansprüche

1. Verfahren eines Fahrzeugs (1) zur Unterstützung eines Fahrers bei einem Wendeanliegen, das Verfahren aufweisend die Schritte:
Erfassen (101), mittels zumindest eines Sensors (11, 12, 13), zumindest eines Sensorwertes zu einer Fahrzeugumgebung;
Erkennen (102) eines Wendeanliegens an einer aktuellen Fahrzeugposition (61);
Ermitteln (103), einer Durchführbarkeit eines Wendemanövers an der aktuellen
Fahrzeugposition (61) basierend auf dem zumindest einen Sensorwert; und Automatischer Rückfahrbetrieb (104) des Fahrzeugs (1), sofern an der aktuellen
Fahrzeugposition (61) ein Wendemanöver nicht durchführbar ist.

2. Verfahren nach Anspruch 1, ferner aufweisend die Schritte:
Erfassen, mittels des zumindest einen Sensors (11, 12, 13), einer Mehrzahl von Sensorwerten zu der Fahrzeugumgebung;
Ermitteln eines zum Wenden des Fahrzeugs (1) geeigneten Ortes (62) basierend auf der Mehrzahl von Sensorwerten,
wobei der automatische Rückfahrbetrieb des Fahrzeugs (1) bis zu dem Ort (62) durchgeführt wird.

3. Verfahren nach Anspruch 2, wobei das Ermitteln des zum Wenden des Fahrzeugs (1) geeigneten Ortes (62) basierend auf der Mehrzahl von Sensorwerten ferner die Schritte aufweist:
Erstellen einer Umgebungskarte basierend auf der Mehrzahl von Sensorwerten; und
Ermitteln des zum Wenden des Fahrzeugs (1) geeigneten Ortes (62) basierend auf der Umgebungskarte.

4. Verfahren nach einem der Ansprüche 2 oder 3, ferner aufweisend die Schritte:
Berechnen eines idealen Wendemanövers an dem Ort (62) basierend auf der Mehrzahl von Sensorwerten; und
Starten des Wendemanövers an dem Ort (62).

5. Verfahren nach Anspruch 4, ferner aufweisend den Schritt:
Ermitteln von aktuellen Verkehrsbedingungen basierend auf der Mehrzahl von Sensorwerten,
wobei das Wendemanöver gestartet wird wenn die Verkehrsbedingungen ein gefahrloses Wenden erlauben.

6. Verfahren nach einem der Ansprüche 4 oder 5, ferner aufweisend den Schritt:
Automatisches Durchführen des Wendemanövers, oder
Anleiten des Fahrers zur Durchführung des Wendemanövers.

7. Verfahren nach einem der Ansprüche 4 bis 6, ferner aufweisend die Schritte:
Ausgeben eines Hinweises mittels eines Ausgabemittels (20);
Empfangen einer Nutzereingabe mittels eines Eingabemittels (20); und
Starten des Wendemanövers basierend auf der Nutzereingabe.

8. Verfahren nach einem der vorangehenden Ansprüche, wobei das Verfahren jederzeit durch den Fahrer beendet werden kann.

9. Steuereinheit (40) zum Durchführen eines Verfahrens nach einem der Ansprüche 1 bis 8.

10. Fahrzeug (1), aufweisend
zumindest einen Sensor (11, 12, 13), der zum Erfassen von Sensorwerten zu einer
Fahrzeugumgebung ausgebildet ist, und
eine Steuereinheit (40) nach Anspruch 9.
